# EUROPEAN PATENT SPECIFICATION

(11) **EP 4 215 340 B1**
(45) Date of publication and mention of the grant of the patent: **18.09.2024**
(21) Application number: 22153319.3
(22) Date of filing: 25.01.2022
(51) Int. Cl.: B29C 64/106, B29C 64/209, B29C 70/14, B29C 70/62, B33Y 10/00, B33Y 30/00, B33Y 70/10

(54) **DEVICE FOR FORMING STRUCTURES FROM A NONCONDUCTIVE MATRIX MATERIAL COMPRISING FIBERS AND METHOD OF ALIGNING FIBERS IN A NONCONDUCTIVE MATRIX MATERIAL**
VORRICHTUNG ZUR FORMUNG VON STRUKTUREN AUS EINEM NICHTLEITENDEN MATRIXMATERIAL MIT FASERN UND VERFAHREN ZUR AUSRICHTUNG VON FASERN IN EINEM NICHTLEITENDEN MATRIXMATERIAL
DISPOSITIF DE FORMATION DE STRUCTURES À PARTIR D'UN MATÉRIAU DE MATRICE NON CONDUCTRICE COMPRENANT DES FIBRES ET PROCÉDÉ D'ALIGNEMENT DE FIBRES DANS UN MATÉRIAU DE MATRICE NON CONDUCTRICE

(43) Date of publication of application: 26.07.2023
(73) Proprietor: Technische Universität Graz, 8010 Graz (AT)
(72) Inventor: Lackner, Florian, 8010 Graz (AT); Stana Kleinschek, Karin, 8010 Graz (AT); Kargl, Rupert, 8010 Graz (AT)
(74) Representative: Schwarz & Partner Patentanwälte GmbH

(56) References cited:
- US-A- 5 057 253
- HIDEMASA TAKANA ET AL: "Numerical simulation on electrostatic alignment control of cellulose nano-fibrils in flow", NANOTECHNOLOGY, INSTITUTE OF PHYSICS PUBLISHING, BRISTOL, GB, vol. 31, no. 20, 28 February 2020 (2020-02-28), pages 205602, XP020353399, ISSN: 0957-4484, [retrieved on 20200228], DOI: 10.1088/1361-6528/AB703D

## Description

The invention concerns a device for forming structures from a nonconductive matrix material comprising fibers according to claim 1, and a method of aligning fibers in a nonconductive matrix material with such a device according to claim 9.

Biological systems found in nature exhibit highly complex hierarchically ordered 3D structures with many degrees of organization and functionalization to achieve unique mechanical and biological properties. The superior mechanical strength and toughness of these naturally evolved composites originates from precise orientation of reinforcing fibers or particles, such as the Bouligand chitin fiber structure found in crabs or lobsters. The most abundant biopolymer, cellulose, grows in plants and trees in a highly hierarchical order, giving wood its remarkably anisotropic material properties. While wood can be easily split in the direction uniaxial to the fibers, it requires more than ten times the force in the perpendicular direction. Further, anisotropy plays a critical role in biological structures for movements and shape changes. While man-made machines rely on specifically designed actuators with complex structures, biological organisms achieve complex motions through the simple partial arrangement of linear contractile elements. One prominent example are the circumferential and helical layered muscles in the human heart to create simultaneously twisting and compressive motions.

While biological systems grow theses anisotropic reinforcement architectures, fiber alignment in technology and especially in extrusion based shaping processes requires external forces.

HIDEMASA TANAKA et. Al. "Numerical simulation on electrostatic alignment control cellulose nano-fibrils in flow", Nanotechnology, Institute of Physics Publishing Bristol, GB, vol. 31, no. 20, 28. February 2020, page 205602, discloses a device for forming structures from a non-conductive matrix material comprising fibers. The device comprises a material inlet, a material outlet and a material channel extending from the material inlet to the material outlet, as well as electrodes arranged between the material inlet and the material outlet.

US 5 057 253 A discloses an apparatus and method of the production of composite material parts by aligning reinforcing fibers through the application of electric fields.

One inevitable external force for all extrusion processes are flow induces shear forces. In manifold examples shear forces align fibers longitudinally with respect to the printing direction. This limits however their applicability due to the lack of controllability in other spatial directions. Magnetic forces applied ether directly in the extrusion unit or in close approximation are used in the prior art throughout literature to align fibers and direct cell growth. However, the magnetic interaction tends to be weak compared to shear forces, which limits its application during extrusion to very specific scenarios. Only a few materials, mainly inorganic ones, have a sufficiently strong magnetic dipole to be used with simple commercial magnets. For the majority of magnetically active biomaterials, technically complicated devices such as cryomagnets are required to generate sufficiently strong magnetic fields, or other technical solutions such as mixing or coating with magnetic nanoparticles are necessary.

The objective of the invention is to overcome these drawbacks of the prior art.

This is achieved by providing a device according to claim 1 and a method according to claim 9.

The device for forming structures from a nonconductive matrix material comprising fibers according to the invention comprises a material inlet, a material outlet and a material channel extending from the material inlet to the material outlet. Furthermore, the device comprises a first electrode and a second electrode, spaced apart from the first electrode, wherein the first electrode and the second electrode are arranged between the material inlet and the material outlet, in the vicinity of the material channel, wherein the material channel extends at least in a section of the material channel between the first electrode and the second electrode.

The configuration of the electrodes of the device according to the invention enables the generation of an electric field, which permeates the material channel, while the nonconductive matrix material comprising the fibers is transported through the material channel. Hereby, it is possible to align the fibers within the material channel, and to overcome the shear forces acting on the matrix material during the extrusion process. Furthermore, this enables the device to be self-sufficient, without the need for one or more external electrodes for example arranged under the device on or in the vicinity of a surface onto which the matrix material is deposited by the device.

The device according to the invention comprises an AC power source connected to the first electrode and the second electrode. An alternating electric field can be generated by these electrodes. This increases the fiber alignment efficiency and prohibits fiber drift towards one of the electrodes.

The first electrode and the second electrode form a boundary of the material channel at least in a section of the material channel. Hereby, the efficiency of the fiber alignment can be further improved.

According to the invention, the device comprises a third electrode and a fourth electrode, spaced apart from the third electrode, wherein the third electrode and the fourth electrode are arranged between the material inlet and the material outlet, in the vicinity of the material channel, wherein the material channel extends at least in a section of the material channel between the third electrode and the fourth electrode. By adding the third electrode and the fourth electrode a more complex field geometry can be achieved, and additional possibilities for specific alignment angles of the fibers can be provided. The device also comprises an AC power source connected to the third electrode and the fourth electrode for generating an alternating electric field.

According to the invention, the first electrode and the second electrode form a boundary of the material channel at least in a section of the material channel, and the third electrode and the fourth electrode are arranged at a distance to the material channel, wherein the AC power source connected to the first electrode and the second electrode is configured to supply a first alternating current to the first electrode and the second electrode, to generate a first periodically alternating electric field, and the AC power source connected to the third electrode and the fourth electrode is configured to supply a second alternating current to the third electrode and the fourth electrode, to generate a second periodically alternating electric field. This electrode configuration enables the induction of a dipole moment in the fibers by the first periodically alternating electric field, while the second periodically alternating electric field can be used for fiber alignment. This enables the use of, a wide variety of fiber material in the device according to the invention. Preferably, the first periodically alternating electric field has a lower field strength than the second periodically alternating electric field. Therefore, lower voltages can be used for the first periodically alternating field.

The first electrode and the second electrode may be arranged in parallel with each other, and the third electrode and the fourth electrode may also be arranged in parallel with each other. This leads to an increase of the sections of the material channel affected by the respective electric fields.

The first electrode and the second electrode may also be arranged at an angle to each other, and the third electrode and the fourth electrode may also be arranged at an angle to each other. A wide variety of field geometries can be achieved in this manner.

According to a further embodiment of the device according to the invention, the device comprises a fifth electrode and a sixth electrode spaced apart from the fifth electrode, wherein the fifth electrode and the sixth electrode are arranged between the material inlet and the material outlet, in the vicinity of the material channel, wherein the material channel extends at least in a section of the material channel between the fifth electrode and the sixth electrode. The device may also comprise a seventh electrode and an eighth electrode spaced apart from the seventh electrode, wherein the seventh electrode and the eighth electrode are arranged between the material inlet and the material outlet, in the vicinity of the material channel, wherein the material channel extends at least in a section of the material channel between the seventh electrode and the eighth electrode. The addition of further electrodes provides a further increase of possible field configurations. The device may also comprise an AC power source connected to the fifth electrode and the sixth electrode, and/or the seventh electrode and the eighth electrode.

At least one of the first electrode, the second electrode, the third electrode, the fourth electrode, the fifth electrode, the sixth electrode, the seventh electrode and the eighth electrode may also be an annular electrode. Annular electrodes provide the possibility to align the fibers essentially in the flow direction of the nonconductive matrix material through the material channel.

The method of aligning fibers in a nonconductive matrix material according to the invention with a device according to the invention comprises the steps of:
- providing the matrix material, comprising the fibers;
- introducing the matrix material into the material channel of the device via the material inlet;
- exposing the matrix material inside the material channel to a first periodically alternating electric field generated by a combination of the first electrode and the second electrode;
- expelling the matrix material from the material channel through the material outlet.

The method according to the invention provides for a cost efficient and fast production of composite materials with structured, reinforced fibers.

Preferably, the method also comprises the step:
- solidifying the matrix material during or after exposing the matrix material to the first periodically alternating electric field.

By solidifying the matrix material, the alignment of the fibers is made permanent.

According to the invention, the first periodically alternating electric field is generated by a combination of the first electrode and the second electrode, and a second periodically alternating electric field is generated by a combination of the third electrode and the fourth electrode.

The method may also comprise the step of:
- solidifying the matrix material during or after exposing the matrix material to the first periodically alternating electric field and the second periodically alternating electric field.

None of the figures discloses the combination of electrodes according to the features of claim 1, but they are useful to understand and explain the device and the method according to the claimed invention.
Figure 1a shows the device according to the invention in a sectional view, with a first electrode and a second electrode in the vicinity of a material channel of the device.
Figure 1b shows the device according to the invention in a sectional view, wherein the first electrode and the second electrode form a boundary of the material channel.
Figure 1c shows the device according to the invention in a sectional view, wherein the first electrode and the second electrode are configured as annular electrodes.
Figure 2 shows the device according to figure 1b, wherein a nonconductive matrix material comprising fibers is fed through the material channel.
Figure 3a, figure 3b and figure 3c show the influence of the configuration of the first electrode and the second electrode of the device according to the invention on fiber alignment.
Figure 4 shows the influence of the presence of an electric field on fiber alignment.
Figure 5 shows a comparison of different flow velocities and field strengths and their influence on fiber alignment.
Figure 6 shows the fiber alignment for different field strengths when using electrodes, which are spaced apart from the material channel.
Figure 7 shows the fiber alignment for different field strengths when using electrodes, which form a boundary of the material channel.
Figure 8 shows the influence of electric field strength on fiber alignment.
Figure 9 shows the relaxation of fiber alignment.

The fundamental idea of the present invention is to control the orientation of fibers 3, which are disposed in a nonconductive matrix material 2, as they flow through a device 1 for forming structures from the nonconductive matrix material 2 comprising the fibers 3. The device is for example an extrusion device or a 3D printer. The main goal is to modify the orientation of the fibers 3 in any desired spatial direction according to structural requirements of an object produced in this manner.

Electric field forces represent a versatile and compared to magnetic forces, technically less demanding external force that can be used in such processes. Dielectric fibers 3 are particularly suitable as fiber material, although the invention can also be implemented with fibers 3, which do not exhibit dielectric properties. Dielectric materials are electrical insulators but can be polarized in electric fields. This dielectric polarization effect, applied to fibers 3, introduces a dipole moment that aligns the fibers 3 parallel to the direction of the electric field. This effect can be applied to for many inorganic materials such as poly(tetrafluoroethylene) (PTFE) whiskers, gold rods, CdS nanorod superlattices, FeOOH attapulgite particles or carbon nanotubes, but also to organic fibers of biological origin such as cellulose nanocrystals (CNC), nanocellulose fibrils (NFC) or chitin. Together with the various matrices in which these fibers 3 can be suspended, electric field alignment represents a versatile method for producing materials with anisotropic behavior.

By integrating electrodes into the device 1 for forming structures according to the invention, and applying strong electric fields, the fibers 3 align parallel to the electric field lines. The uniaxial alignment of the fibers 3 due to the shear forces of the material 2 can either be supported or overcome, allowing the fibers 3 to be uniaxially aligned but also perpendicular to the flow direction of the matrix material 2. In general, the present invention can be implemented in any structure forming process, for example an extrusion process, or 3d printing, regardless of size or scale.

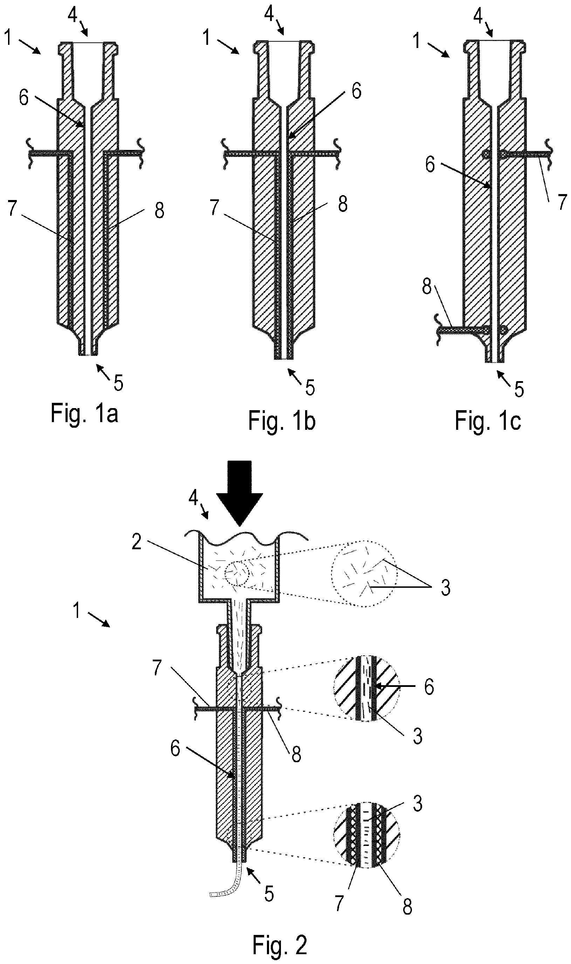

Figure 1a shows a first embodiment of the device 1 for forming structures from the nonconductive matrix material 2 comprising fibers 3.

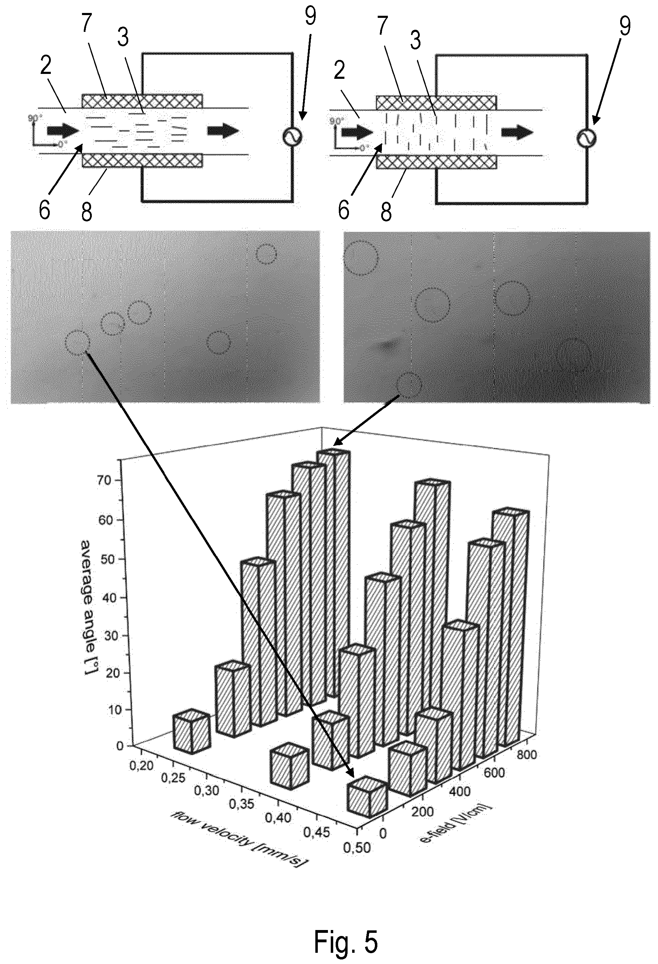

The matrix material 2 and the fibers 3 are shown in figure 2 in additional detail. The device 1 comprises a material inlet 4, a material outlet 5 and a material channel 6 extending from the material inlet 4 to the material outlet 5. Furthermore, the device 1 comprises a first electrode 7 and a second electrode 8, spaced apart from the first electrode 7. The first electrode 7 and the second electrode 8 are arranged between the material inlet 4 and the material outlet 5, in the vicinity of the material channel 6. The material channel 6 extends at least in a section of the material channel 6 between the first electrode 7 and the second electrode 8. When the matrix material 2 comprising the fibers 3 is introduced into the material inlet 4, it flows through the material channel 6 towards the material outlet 5, where it exits the device 1.The device 1 may comprise an AC power source 9, which is depicted in figures 5 to 7, and which is connected to the first electrode 7 and the second electrode 8. The AC power source 9 can also be provided as an external power source 9 to the device 1. By connecting the first electrode 7 and the second electrode 8 to the AC power source 9, a first alternating electric field is generated by the first electrode 7 and the second electrode 8. The fibers 3 in the matrix material 2 are thereby aligned, when traversing the material channel 6 between the first electrode 7 and the second electrode 8.

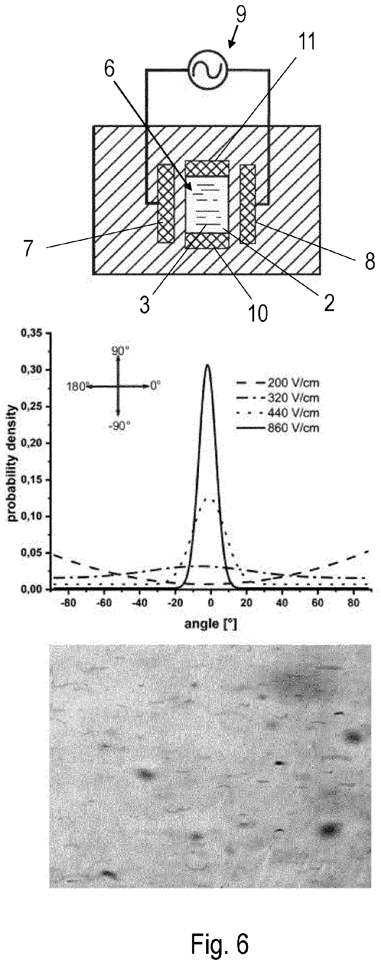

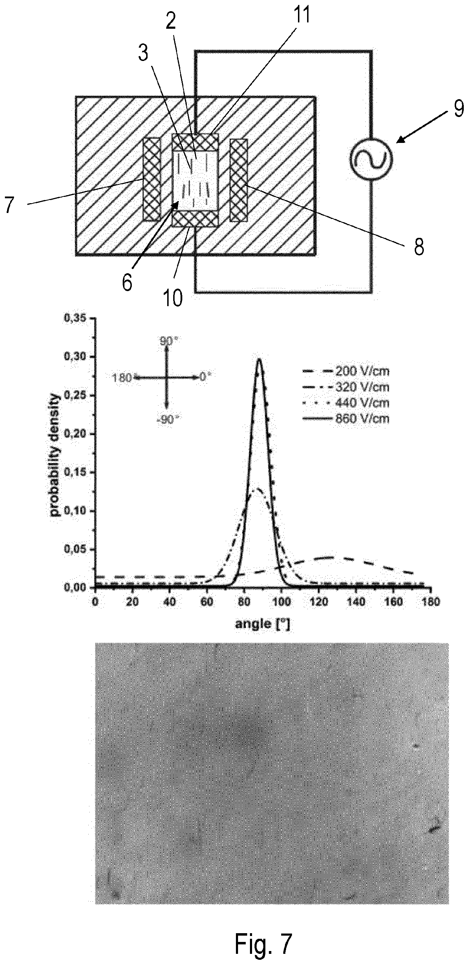

As shown in figure 1b, the first electrode 7 and the second electrode 8 forms a boundary of the material channel 6 at least in a section of the material channel 6. This leads to a direct contact between the first electrode 7 and the second electrode 8 and the matrix material 2, which increases the efficiency of fiber alignment, and reducing the necessary field strength of the first alternating electric field. This effect is described in more detail with reference to figures 6 and 7 hereinbelow.

Figure 1c shows a configuration, wherein the first electrode 7 and the second electrode 8 are designed as annular electrodes. These annular electrodes may also form a boundary of the material channel 6. This increases the number of possible fiber alignment geometries, which are achievable with the device 1.

For example, the fibers may be aligned essentially in the direction of the material channel 6 by employing a first electrode 7 and a second electrode 8 which are designed as annular electrodes.

Figure 2 shows the device as depicted in figure 1b in more detail.

The nonconductive matrix material 2 is introduced into the material channel 6 of the device 1 via the material inlet 4 as can be seen in figure 2. Inside the material channel 6 the matrix material 2 the fibers 3 begin to orient themselves in the flow direction of the matrix material 2 due to shear forces acting on the matrix material 2, as shown in magnification in figure 2. The matrix material 2 is then exposed to the first periodically alternating field generated by a combination of the first electrode 7 and the second electrode 8. This leads to an alignment of the fibers 3 in the material channel 6, as shown in detail in figure 2 before the matrix material 2 is expelled from the material channel 6 through the material outlet 5. By exposing the matrix material 2 with the fibers 3 to the first periodically alternating electric field, an alignment of the fibers 3 can be achieved, while the alignment orientation is dependent on the field geometry and thereby the placement of the first electrode 7 and the second electrode 8 within the device 1.

According to an embodiment not covered by the invention, alternative to the AC power source 9, a DC power source could also be used. The application of the AC power source 9 has the advantage, that the fibers 3 are aligned in the matrix material 2, without introducing a drift of the fibers 3 to one of the electrodes.

The matrix material 2 is solidified during or after exposing the matrix material 2 to the first periodically alternating electric field. Hereby, the orientation of the fibers 2 in the matrix material 2 is fixated and made permanent.

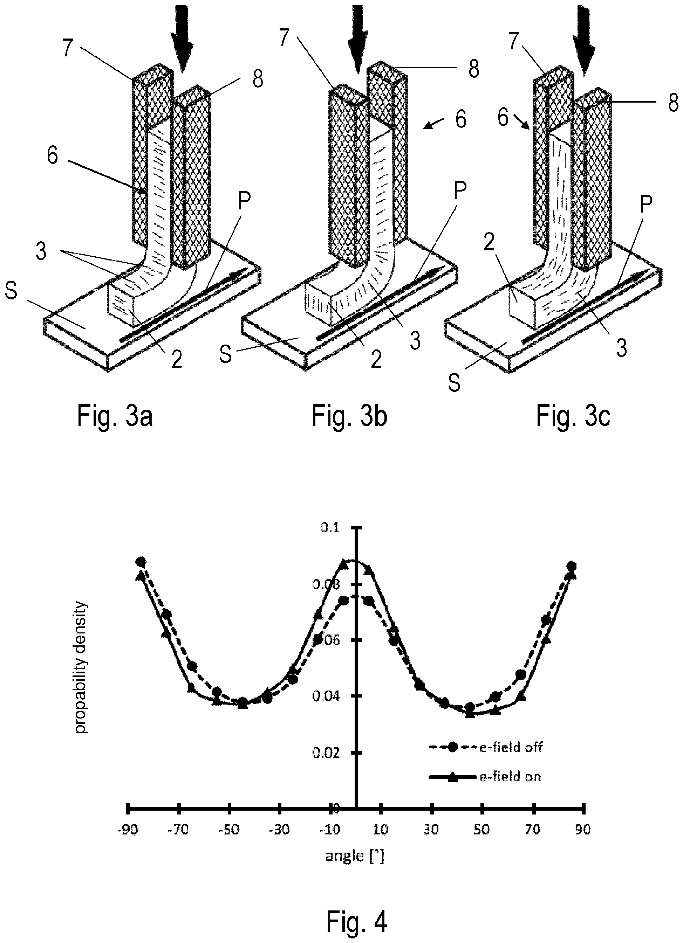

Figure 3a and figure 3b show different electrode configurations of the first electrode 7 and the second electrode 8, and their influence on fiber alignment when an alternating current is supplied to the first electrode 7 and the second electrode 8 thereby generating the first periodically alternating electric field. In figure 3a, the fibers are aligned in a direction essentially perpendicular to a printing direction P, which is indicated by an arrow on a substrate S, on which the matrix material 2 is deposited. In figure 3b, the first electrode 7 and the second electrode 8 are aligned perpendicular to the printing direction, therefore aligning the fibers 3 vertically out of the substrate plane. In figure 3c, no voltage is supplied to the first electrode 7 and the second electrode 8. The fibers 3 are therefore aligned in the direction of the material channel 6 due to the shear forces acting on the fibers 3 in the material channel 6.

Figure 4 shows a typical result of the fiber alignment by using the device 1. Figure 4 plots the results of the alignment of the printed strands for figure 3a. The number of fibers 3 aligned in the perpendicular direction, or angle of 0°, could be increased by the used electric field. Some of the fibers 3 remain unaffected by the electric field alignment and remain without any alignment. This could possibly be due to the short circuit caused by the formation of carbon nanotube dendrites which limits the applicable voltage. To further improve the alignment quality, different types of nozzles, e.g. gitter type or non-conducting fibers 3, e.g. cellulose nanofibrils or cellulose nanocrystals, can be used.

Figure 5 shows two scenarios with no electric field application on the left side of figure 5, wherein the fibers 3 are oriented in the flow direction of the matrix material 2, shown with thick arrows, and with maximum electric field strength applied to the device 1 on the right side of figure 5, wherein the fibers 3 are oriented perpendicular to the flow direction of the matrix material 2. This clearly illustrates the alignment of the fibers 3.

The 3D plot provided in figure 5 of the average angle further quantifies the visual results. From the diagram in figure 5 it can be seen, that the degree of alignment parallel to the flow direction increases with increasing flow velocity due to shear forces. The average angle of 8.8 ° at 0.24 mm/s and 0 V/cm decreased to 6.3 ° at 0.48 mm/s and 0 V/cm. As the field strength increased, the alignment angle perpendicular to the flow direction increased exponentially regardless of the flow velocity. However, as expected, force competition between shear forces and electric field forces always resulted in a decrease in this alignment. For example, comparing the average angles for the highest field strength of 733 V/cm, the average angle decreased from 70 ° at 0.24 mm/s to 61 ° at 0.48 mm/s flow velocity. However, a further increase in electric field strength compensated for the reduced alignment quality due to increased shear forces. For engineering applications, there is no limit to the flow velocity, as long as the electric field strength is sufficiently strong.

The device 1 according to the invention also comprises a third electrode 10 and a fourth electrode 11, spaced apart from the third electrode 10, wherein the third electrode 10 and the fourth electrode 11 are arranged between the material inlet 4 and the material outlet 5, in the vicinity of the material channel, wherein the material channel 6 extends at least in a section of the material channel 6 between the third electrode 10 and the fourth electrode 11. The first periodically alternating electric field is generated by a combination of the first electrode 7 and the second electrode 8, and a second periodically alternating electric field is generated by a combination of the third electrode 10 and the fourth electrode 11.

By adding the third electrode 10 and the fourth electrode 11 additional fiber alignment geometries are possible by using the device 1. Preferably, the matrix material 2 is solidified during or after exposing the matrix material 2 to the first periodically alternating electric field and the second periodically alternating electric field, or preferably after exposing the matrix material to all electric fields generated by the device 1. The device 1 also comprises an AC power source 9 connected to the third electrode 10 and the fourth electrode 11. This may be the same AC power source 9 as for the first electrode 7 and the second electrode 8, or an additional AC power source 9.

The first electrode 7 and the second electrode 8 form a boundary of the material channel 6 at least in a section of the material channel 6.

Figure 6 and figure 7 show the effect of placing a pair of electrodes 7 and 8 or 10 or 11 in such a fashion, that they form a boundary of the material channel 6. In figure 6 and figure 7 the first electrode 7 and the second electrode 8 are arranged at a distance to the material channel 6, and the third electrode 10 and the fourth electrode 11 are arranged to form a boundary of the material channel 6. In the configuration of figure 6, that is not according to the claims, only the first electrode 7 and the second electrode 8, are connected to the AC power source 9 and generate the first periodically alternating electric field. In the configuration of figure 7, that is not according to the claims, only the third electrode 10 and the fourth electrode 11, are connected to the AC power source 9 and generate the first periodically alternating electric field or the second periodically alternating electric field. The diagrams in the middle of figures 6 and 7 show the difference in the effectiveness of the fiber alignment process for different field strengths of the first or second periodically alternating electric field. It can be seen, that when the electrodes 10 and 11 form a boundary of the material channel 6, a higher degree of fiber alignment can be generated, even with lower field strengths, see for example the probability density for 440 V/cm in figure 6 compared to figure 7. This effect can be utilized for example for fiber materials, which do not have a permanent dielectric dipole. An additional pair of electrodes 10 and 11 in the form of the third electrode 10 and the fourth electrode 11 can be installed to "activate" the fibers 3, preferably with a lower field strength and direct contact of the electrodes 10, 11 to the matrix material 4, whereby the third electrode 10 and the fourth electrode 11 form a boundary of the material channel 6. The first electrode 7 and the second electrode 8 would then serve as alignment electrodes, supplied with high voltages, which would increase the material and usability scope of the present invention.

According to the invention, the first electrode 10 and the second electrode 11 form a boundary of the material channel 6 at least in a section of the material channel 6. The third electrode 10 and the fourth electrode 11 are arranged at a distance to the material channel 6, wherein the AC power source 9 connected to the first electrode 7 and the second electrode 8 is configured to supply a first alternating current to the first electrode 7 and the second electrode 8, to generate the first periodically alternating electric field, and the AC power source 9 connected to the third electrode 10 and the fourth electrode 11 is configured to supply a second alternating current to the third electrode 10 and the fourth electrode 11, to generate a second periodically alternating electric field. Preferably, the first periodically alternating electric field has a lower field strength than the second periodically alternating electric field.

For fibers 3 that have a permanent dipole, direct electrode contact with the matrix material 2 is not a necessity if sufficiently strong periodically alternating electric fields are applied. For materials that do not exhibit this permanent dipole, electrodes with direct matrix contact are beneficially. Regardless of direct or indirect electrode contact with the matrix material 2, the electrodes should be placed in the device 1 in close proximity to the matrix material 2 to ensure a uniform electric field and varying axial controllability of the alignment. The short-circuit, electrolysis and matrix degradation limitations caused by direct contact with the electric field can be eliminated in this way. For materials that do not have a permanent dielectric dipole, an additional pair of electrodes, like described hereinabove, is applied in the device 1, according to the claimed invention , to "activate" the fibers 3 with lower voltages and direct contact to initiate a dipole. The alignment electrodes with high voltages could then be attached without contact, which would increase the material and usability scope.

The first electrode 7 and the second electrode 8 are preferably arranged in parallel with each other, and the third electrode 10 and the fourth electrode 11 are preferably also arranged in parallel with each other. This configuration of electrodes is depicted in the figures. According to an alternative embodiment of the device 1 according to the invention, the first electrode 7 and the second electrode 8 are arranged at an angle to each other, and the third electrode 10 and the fourth electrode 11 are also arranged at an angle to each other. By varying the angles of the electrodes to each other the field geometry of the produced electric fields can be adapted to produce different fiber alignment geometries.

In addition to the four electrodes 7, 8, 10 and 11 described hereinabove, the device 1 according to the invention may comprise a fifth electrode and a sixth electrode spaced apart from the fifth electrode, wherein the fifth electrode and the sixth electrode are arranged between the material inlet 4 and the material outlet 5, in the vicinity of the material channel 6, wherein the material channel 6 extends at least in a section of the material channel 6 between the fifth electrode and the sixth electrode. Furthermore, the device 1 may also comprise a seventh electrode and an eighth electrode spaced apart from the seventh electrode, wherein the seventh electrode and the eighth electrode are arranged between the material inlet 4 and the material outlet 5, in the vicinity of the material channel 6, wherein the material channel 6 extends at least in a section of the material channel 6 between the seventh electrode and the eighth electrode. The device 1 may also comprise an AC power source 9 connected to the fifth electrode and the sixth electrode, and/or the seventh electrode and the eighth electrode. At least one of the first electrode 7, the second electrode 8, the third electrode 10, the fourth electrode 11, the fifth electrode, the sixth electrode, the seventh electrode and the eighth electrode is preferably an annular electrode. By increasing the number of electrodes more complex field geometries can be achieved in order to produce more complex fiber alignment geometries.

As described, the orientation of fibers 3 in matrix material 2, for example in polymers, plays a crucial role in the properties and behavior of the manufactured products. The invention offers several advantages over technologies, which form the state of the art. These advantages are listed in further detail below.

The invention makes fiber alignment into all directions is possible. Compared to the most commonly used and inevitable shear force alignment, alignment of the fibers 3 is not limited to uniaxial orientation of the fibers 3 by utilizing the present invention. By mounting and activating pairs of electrodes on different axes in the device 1 according to the invention, fiber alignment in any spatial direction is possible, even in any radial direction perpendicular to the flow direction.

The fiber orientation can be changed during the extrusion. By selectively activating and deactivating different electrode pairs of electrodes in the device 1, the direction of fiber orientation can be changed during extrusion. This enables the production of solids with several different fiber orientations and properties in one manufacturing step.

A wide range of fiber materials is suitable for the present invention. This is true for various inorganic materials (poly(tetrafluoroethylene) (PTFE) whiskers, gold rods, CdS nanorod superlattices, FeOOH attapulgite particles or carbon nanotubes) as well as for organic materials of biological origin such as cellulose nanocrystals (CNC), nano-cellulose fibrils (NFC) or chitin, to name a few examples.

A wide range of matrix materials 2 can be used. Along with a wide range of fiber materials, many different matrices, like polymers, can also be used to suspend the fibers 3 in. These include technically important synthetic polymers such as epoxides, acrylates or PDMS as well as naturally occurring substances such as oils and fats and their derivatives. The requirements are that these matrix materials 2 must be non-conductive to avoid short circuits. Also, it is advantageous if the matrix material 2 is stable against high electrical currents. Also, aquatic materials can be used as matrix material 2.

Integration with many different extrusion devices is possible. This invention is not limited to very small extrusion devices such as 3D printing. Many different applications such as screw extruders are possible.

Some possible integrations of the present invention into diverse areas of interest are explained hereinbelow:
Biotechnologies: Similar to plant fibers, mammalian meat exhibits highly anisotropic structures that gives it material properties and functions. Due to ethical and environmental concerns, the production of cell-engineered artificial meat is of increasing interest. The present invention could be used to orient fibers 3 during the extrusion or production process to mimic the fibrous structures of animal meat.

Medical and neuro-technologies: Since materials of biological origin can be used for electric field alignment, scaffolds and products for medical applications could be fabricated that provide sufficient biocompatibility for their use in living organisms. Since both mechanical properties and biological properties such as cell growth are affected by fiber alignment, high valuable medical products with specific fiber alignment could be a target market for the present invention.

Robotics: soft robotics is a rapidly developing field that attempts to replicate the movements of living organisms. They rely on structures that exhibit anisotropic movements under certain external stimuli. The fabrication of anisotropic components using this invention could be integrated into this area of interest. This controlled anisotropic 3D printing is referred as 4D printing in the literature.

Nanotechnologies: Many materials, particularly those in the nanomaterials group, change their properties significantly when structured in a particular way. For example, nanocellulose crystals change their optical properties significantly with the degree of crystal alignment, which is interesting for many applications such as actuators or sensors.

Furthermore, the present invention could be integrated into the manufacturing technology of 3D printing or, more specifically, the extrusion-based special case of "direct ink writing". This method of manufacturing 3D solids could be used in almost all of the above-mentioned fields in various applications.

### Example 1:

The following two different polymeric matrix systems were tried out:
- UV curable acrylate resin
- Heat curable PDMS.

In these two matrix systems chemically modified multi walled carbon nanotubes (MWCNT) were dispersed as fibers 3 to get the fiber suspension for the following experiments.

The proof of-concept experiments could be divided into three parts:
1. static experiments without any fluidic motion
2. dynamic experiments in a flow cell to visualize the alignment and
3. dynamic experiments during 3D printing to demonstrate a potential application.

For the experiments special alignment chambers were designed and 3D printed. In these chambers two flat copper electrodes with 0.5 mm thickness were placed with a distance of 4 mm in between. The matrix material 2 with the fibers 3 suspended therein was filled into the chamber before the experiment and different DC voltages were applied to the setup to generate the electric field. After a specified timeframe the liquid fiber suspension was solidified using UV light exposure (acrylate resin) or with 80 °C of heat (PDMS). For the relaxation experiments the liquid aligned fiber suspension remained untouched for a specified time before curing. The degree of alignment was quantified by using optical light microscopy and the program ImageJ for image analysis.

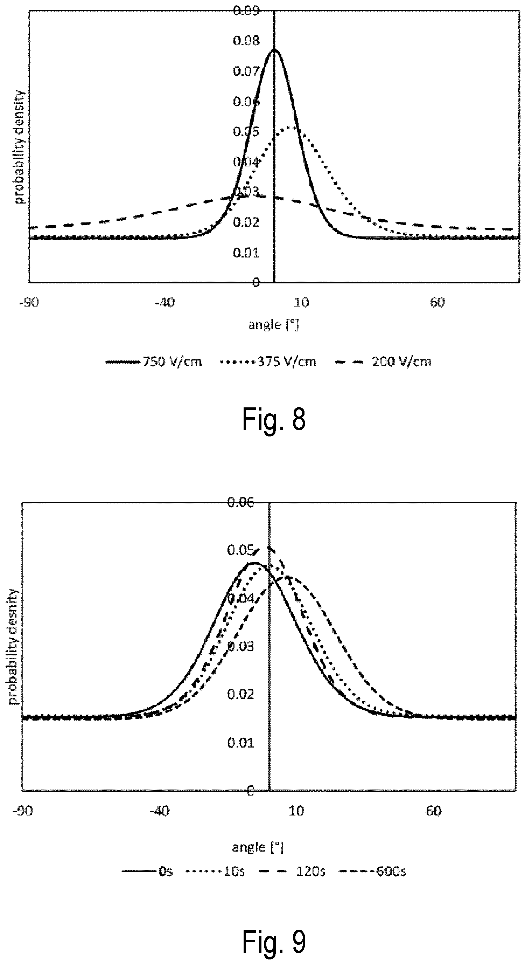

It could be proofed that the alignment of the fibers (MWCNT) worked in the chosen matrix materials 2. With increasing electric field strength, the degree of alignment increases, which is shown in Figure 8. Further, the relaxation kinetics were evaluated by multiple experiment and demonstrated that they are much slower than the alignment of the fibers 3 which is favorable for the planned applications, which is shown in figure 9.

## Claims

1. Device (1) for forming structures from a nonconductive matrix material (2) comprising fibers (3), wherein the device (1) comprises a material inlet (4), a material outlet (5) and a material channel (6) extending from the material inlet (4) to the material outlet (5), wherein the device (1) comprises a first electrode (7) and a second electrode (8), spaced apart from the first electrode (7), wherein the first electrode (7) and the second electrode (8) are arranged between the material inlet (4) and the material outlet (5), in the vicinity of the material channel (6), wherein the material channel (6) extends at least in a section of the material channel (6) between the first electrode (7) and the second electrode (8), wherein the device (1) comprises a third electrode (10) and a fourth electrode (11), spaced apart from the third electrode (10), wherein the third electrode (10) and the fourth electrode (11) are arranged between the material inlet (4) and the material outlet (5), in the vicinity of the material channel (6), wherein the material channel (6) extends at least in a section of the material channel (6) between the third electrode (10) and the fourth electrode (11), and the first electrode (7) and the second electrode (8) form a boundary of the material channel (6) at least in a section of the material channel (6), **characterized in that** the third electrode (10) and the fourth electrode (11) are arranged at a distance to the material channel (6), wherein an AC power source (9) connected to the first electrode (7) and the second electrode (8) is configured to supply a first alternating current to the first electrode (7) and the second electrode (8), to generate a first periodically alternating electric field, and an AC power source (9) connected to the third electrode (10) and the fourth electrode (11) is configured to supply a second alternating current to the third electrode (10) and the fourth electrode (11), to generate a second periodically alternating electric field.

2. Device (1) according to claim 1, **characterized in that** the first periodically alternating electric field has a lower field strength than the second periodically alternating electric field.

3. Device (1) according to claim 1, **characterized in that** the first electrode (7) and the second electrode (8) are arranged in parallel with each other, and the third electrode (10) and the fourth electrode (11) are arranged in parallel with each other.

4. Device (1) according to claim 1, **characterized in that** the first electrode (7) and the second electrode (8) are arranged at an angle to each other, and the third electrode (10) and the fourth electrode (11) are arranged at an angle to each other.

5. Device (1) according to any of claims 1 to 4, **characterized in that** the device (1) comprises a fifth electrode and a sixth electrode spaced apart from the fifth electrode, wherein the fifth electrode and the sixth electrode are arranged between the material inlet (4) and the material outlet (5), in the vicinity of the material channel (6), wherein the material channel (6) extends at least in a section of the material channel (6) between the fifth electrode and the sixth electrode.

6. Device (1) according to any of claims 1 to 5, **characterized in that** the device (1) comprises a seventh electrode and an eighth electrode spaced apart from the seventh electrode, wherein the seventh electrode and the eighth electrode are arranged between the material inlet (4) and the material outlet (5), in the vicinity of the material channel (6), wherein the material channel (6) extends at least in a section of the material channel (6) between the seventh electrode and the eighth electrode.

7. Device (1) according to any of claims 5 or 6, **characterized in that**, the device (1) comprises an AC power source (9) connected to the fifth electrode and the sixth electrode, and/or the seventh electrode and the eighth electrode.

8. Device (1) according to any of claims 1 to 7, **characterized in that** at least one of the first electrode (7), the second electrode (8), the third electrode (10), the fourth electrode (11), the fifth electrode, the sixth electrode, the seventh electrode and the eighth electrode is an annular electrode.

9. Method of aligning fibers in a nonconductive matrix material (2) with a device (1) according to claim 1, comprising the steps of:
- providing the matrix material (2), comprising the fibers (3);
- introducing the matrix material (2) into the material channel (6) of the device (1) via the material inlet (4);
- exposing the matrix material (2) inside the material channel (6) to the first periodically alternating electric field generated by a combination of the first electrode (7) and the second electrode (8);
- exposing the matrix material (2) inside the material channel (6) to the second periodically alternating electric field generated by a combination of the third electrode (10) and the fourth electrode (11);
- expelling the matrix material (2) from the material channel (6) through the material outlet (5).

10. Method according to claim 9, comprising the step of:
- solidifying the matrix material (2) during or after exposing the matrix material (2) to the first periodically alternating electric field.

11. Method according to claim 9, comprising the step of:
- solidifying the matrix material (2) during or after exposing the matrix material (2) to the first periodically alternating electric field and the second periodically alternating electric field.

## Patentansprüche

1. Vorrichtung (1) zur Bildung von Strukturen aus einem nichtleitenden, Fasern (3) aufweisenden Matrixmaterial (2), wobei die Vorrichtung (1) einen Materialeinlass (4), einen Materialauslass (5) und einen vom Materialeinlass (4) zum Materialauslass (5) verlaufenden Materialkanal (6) aufweist, wobei die Vorrichtung (1) eine erste Elektrode (7) und eine zweite Elektrode (8) umfasst, die von der ersten Elektrode (7) beabstandet sind, wobei die erste Elektrode (7) und die zweite Elektrode (8) zwischen dem Materialeinlass (4) und dem Materialauslass (5), in der Nähe des Materialkanals (6), angeordnet sind, wobei sich der Materialkanal (6) zumindest in einem Abschnitt des Materialkanals (6) zwischen der ersten Elektrode (7) und der zweiten Elektrode (8) erstreckt, wobei die Vorrichtung (1) eine dritte Elektrode (10) und eine von der dritten Elektrode (10) beabstandete vierte Elektrode (11) aufweist, wobei die dritte Elektrode (10) und die vierte Elektrode (11) zwischen dem Materialeinlass (4) und dem Materialauslass (5), in der Nähe des Materialkanals (6), angeordnet sind, wobei sich der Materialkanal (6) zumindest in einem Abschnitt des Materialkanals (6) zwischen der dritten Elektrode (10) und der vierten Elektrode (11) erstreckt, und die erste Elektrode (7) und die zweite Elektrode (8) zumindest in einem Abschnitt des Materialkanals (6) eine Begrenzung des Materialkanals (6) bilden, **dadurch gekennzeichnet, dass** die dritte Elektrode (10) und die vierte Elektrode (11) in einem Abstand zum Materialkanal (6) angeordnet sind, wobei eine mit der ersten Elektrode (7) und der zweiten Elektrode (8) verbundene Wechselstromquelle (9) dazu ausgebildet ist, der ersten Elektrode (7) und der zweiten Elektrode (8) einen ersten Wechselstrom zuzuführen, um ein erstes periodisch wechselndes elektrisches Feld zu erzeugen, und eine mit der dritten Elektrode (10) und der vierten Elektrode (11) verbundene Wechselstromquelle (9) dazu ausgebildet ist, der dritten Elektrode (10) und der vierten Elektrode (11) einen zweiten Wechselstrom zuzuführen, um ein zweites periodisch wechselndes elektrisches Feld zu erzeugen.

2. Vorrichtung (1) nach Anspruch 1, **dadurch gekennzeichnet, dass** das erste periodisch wechselnde elektrische Feld eine geringere Feldstärke aufweist als das zweite periodisch wechselnde elektrische Feld.

3. Vorrichtung (1) nach Anspruch 1, **dadurch gekennzeichnet, dass** die erste Elektrode (7) und die zweite Elektrode (8) parallel zueinander angeordnet sind, und die dritte Elektrode (10) und die vierte Elektrode (11) parallel zueinander angeordnet sind.

4. Vorrichtung (1) nach Anspruch 1, **dadurch gekennzeichnet, dass** die erste Elektrode (7) und die zweite Elektrode (8) in einem Winkel zueinander angeordnet sind, und die dritte Elektrode (10) und die vierte Elektrode (11) in einem Winkel zueinander angeordnet sind.

5. Vorrichtung (1) nach einem der Ansprüche 1 bis 4, **dadurch gekennzeichnet, dass** die Vorrichtung (1) eine fünfte Elektrode und eine von der fünften Elektrode beabstandete sechste Elektrode umfasst, wobei die fünfte Elektrode und die sechste Elektrode zwischen dem Materialeinlass (4) und dem Materialauslass (5) in der Nähe des Materialkanals (6) angeordnet sind, wobei sich der Materialkanal (6) zumindest in einem Abschnitt des Materialkanals (6) zwischen der fünften Elektrode und der sechsten Elektrode erstreckt.

6. Vorrichtung (1) nach einem der Ansprüche 1 bis 5, **dadurch gekennzeichnet, dass** die Vorrichtung (1) eine siebte Elektrode und eine von der siebten Elektrode beabstandete achte Elektrode aufweist, wobei die siebte Elektrode und die achte Elektrode zwischen dem Materialeinlass (4) und dem Materialauslass (5) in der Nähe des Materialkanals (6) angeordnet sind, wobei sich der Materialkanal (6) zumindest in einem Abschnitt des Materialkanals (6) zwischen der siebten Elektrode und der achten Elektrode erstreckt.

7. Vorrichtung (1) nach einem der Ansprüche 5 oder 6, **dadurch gekennzeichnet, dass** die Vorrichtung (1) eine Wechselstromquelle (9) umfasst, die mit der fünften Elektrode und der sechsten Elektrode und/oder der siebten Elektrode und der achten Elektrode verbunden ist.

8. Vorrichtung (1) nach einem der Ansprüche 1 bis 7, **dadurch gekennzeichnet, dass** mindestens eine der ersten Elektrode (7), der zweiten Elektrode (8), der dritten Elektrode (10), der vierten Elektrode (11), der fünften Elektrode, der sechsten Elektrode, der siebten Elektrode und der achten Elektrode eine Ringelektrode ist.

9. Verfahren zum Ausrichten von Fasern in einem nichtleitenden Matrixmaterial (2) mit einer Vorrichtung (1) nach Anspruch 1, das die folgenden Schritte umfasst:
- Bereitstellung des Matrixmaterials (2), das die Fasern (3) enthält;
- Einbringen des Matrixmaterials (2) in den Materialkanal (6) der Vorrichtung (1) über den Materialeinlass (4);
- Aussetzen des Matrixmaterials (2) innerhalb des Materialkanals (6) dem ersten periodisch wechselnden elektrischen Feld, das durch eine Kombination aus der ersten Elektrode (7) und der zweiten Elektrode (8) erzeugt wird;
- Aussetzen des Matrixmaterials (2) innerhalb des Materialkanals (6) dem zweiten periodisch wechselnden elektrischen Feld, das durch eine Kombination aus der dritten Elektrode (10) und der vierten Elektrode (11) erzeugt wird;
- Austreiben des Matrixmaterials (2) aus dem Materialkanal (6) durch den Materialauslass (5).

10. Verfahren nach Anspruch 9, das den folgenden Schritt umfasst:
- Verfestigung des Matrixmaterials (2) während oder nach dem Aussetzen des Matrixmaterials (2) dem ersten periodisch wechselnden elektrischen Feld.

11. Verfahren nach Anspruch 9, das den folgenden Schritt umfasst:
- Verfestigung des Matrixmaterials (2) während oder nach dem Aussetzen des Matrixmaterials (2) dem ersten periodisch wechselnden elektrischen Feld und dem zweiten periodisch wechselnden elektrischen Feld.

## Revendications

1. Dispositif (1) pour former des structures à partir d'un matériau de matrice non conductrice (2) comprenant des fibres (3), dans lequel le dispositif (1) comprend une entrée de matériau (4), une sortie de matériau (5) et un canal de matériau (6) s'étendant de l'entrée de matériau (4) à la sortie de matériau (5), dans lequel le dispositif (1) comprend une première électrode (7) et une deuxième électrode (8), espacée de la première électrode (7), dans lequel la première électrode (7) et la deuxième électrode (8) sont agencées entre l'entrée de matériau (4) et la sortie de matériau (5), à proximité du canal de matériau (6), dans lequel le canal de matériau (6) s'étend au moins dans une partie du canal de matériau (6) entre la première électrode (7) et la deuxième électrode (8), dans lequel le dispositif (1) comprend une troisième électrode (10) et une quatrième électrode (11), espacée de la troisième électrode (10), dans lequel la troisième électrode (10) et la quatrième électrode (11) sont agencées entre l'entrée de matériau (4) et la sortie de matériau (5), à proximité du canal de matériau (6), dans lequel le canal de matériau (6) s'étend au moins dans une partie du canal de matériau (6) entre la troisième électrode (10) et la quatrième électrode (11), et la première électrode (7) et la deuxième électrode (8) forment une limite du canal de matériau (6) au moins dans une partie du canal de matériau (6), **caractérisé en ce que** la troisième électrode (10) et la quatrième électrode (11) sont agencées à une certaine distance du canal de matériau (6), dans lequel une source d'alimentation en courant alternatif (9) connectée à la première électrode (7) et à la deuxième électrode (8) est configurée pour fournir un premier courant alternatif à la première électrode (7) et à la deuxième électrode (8), pour générer un premier champ électrique périodiquement alternatif, et une source d'alimentation en courant alternatif (9) connectée à la troisième électrode (10) et à la quatrième électrode (11) est configurée pour fournir un second courant alternatif à la troisième électrode (10) et à la quatrième électrode (11), pour générer un second champ électrique périodiquement alternatif.

2. Dispositif (1) selon la revendication 1, **caractérisé en ce que** le premier champ électrique périodiquement alternatif présente une intensité de champ inférieure à celle du second champ électrique périodiquement alternatif.

3. Dispositif (1) selon la revendication 1, **caractérisé en ce que** la première électrode (7) et la deuxième électrode (8) sont agencées mutuellement parallèles, et la troisième électrode (10) et la quatrième électrode (11) sont agencées mutuellement parallèles.

4. Dispositif (1) selon la revendication 1, **caractérisé en ce que** la première électrode (7) et la deuxième électrode (8) sont agencées à un certain angle l'une par rapport à l'autre, et la troisième électrode (10) et la quatrième électrode (11) sont agencées à un certain angle l'une par rapport à l'autre.

5. Dispositif (1) selon l'une quelconque des revendications 1 à 4, **caractérisé en ce que** le dispositif (1) comprend une cinquième électrode et une sixième électrode espacée de la cinquième électrode, dans lequel la cinquième électrode et la sixième électrode sont agencées entre l'entrée de matériau (4) et la sortie de matériau (5), à proximité du canal de matériau (6), dans lequel le canal de matériau (6) s'étend au moins dans une partie du canal de matériau (6) entre la cinquième électrode et la sixième électrode.

6. Dispositif (1) selon l'une quelconque des revendications 1 à 4, **caractérisé en ce que** le dispositif (1) comprend une septième électrode et une huitième électrode espacée de la septième électrode, dans lequel la septième électrode et la huitième électrode sont agencées entre l'entrée de matériau (4) et la sortie de matériau (5), à proximité du canal de matériau (6), dans lequel le canal de matériau (6) s'étend au moins dans une partie du canal de matériau (6) entre la septième électrode et la huitième électrode.

7. Dispositif (1) selon l'une quelconque des revendications 5 ou 6, **caractérisé en ce que** le dispositif (1) comprend une source d'alimentation en courant alternatif (9) connectée à la cinquième électrode et à la sixième électrode, et/ou à la septième électrode et à la huitième électrode.

8. Dispositif (1) selon l'une quelconque des revendications 1 à 7, **caractérisé en ce qu'**au moins l'une de la première électrode (7), de la deuxième électrode (8), de la troisième électrode (10), de la quatrième électrode (11), de la cinquième électrode, de la sixième électrode, de la septième électrode et de la huitième électrode est une électrode annulaire.

9. Procédé d'alignement de fibres dans un matériau de matrice non conductrice (2) avec un dispositif (1) selon la revendication 1, comprenant les étapes consistant à :
- fournir le matériau de matrice (2), comprenant les fibres (3) ;
- introduire le matériau de matrice (2) dans le canal de matériau (6) du dispositif (1) via l'entrée de matériau (4) ;
- exposer le matériau de matrice (2) à l'intérieur du canal de matériau (6) au premier champ électrique périodiquement alternatif généré par une combinaison de la première électrode (7) et de la deuxième électrode (8) ;
- exposer le matériau de matrice (2) à l'intérieur du canal de matériau (6) au second champ électrique périodiquement alternatif généré par une combinaison de la troisième électrode (10) et de la quatrième électrode (11) ;
- expulser le matériau de matrice (2) à partir du canal de matériau (6) à travers la sortie de matériau (5).

10. Procédé selon la revendication 9, comprenant l'étape consistant à :
- solidifier le matériau de matrice (2) pendant ou après l'exposition du matériau de matrice (2) au premier champ électrique périodiquement alternatif.

11. Procédé selon la revendication 9, comprenant l'étape consistant à :
- solidifier le matériau de matrice (2) pendant ou après l'exposition du matériau de matrice (2) au premier champ électrique périodiquement alternatif et au second champ électrique périodiquement alternatif.
